# EUROPÄISCHE PATENTSCHRIFT

(11) **EP 1 128 957 B1**
(45) Veröffentlichungstag und Bekanntmachung des Hinweises auf die Patenterteilung: **03.03.2004**
(21) Anmeldenummer: 99953798.8
(22) Anmeldetag: 13.10.1999
(51) Int. Cl.: B32B 27/08

(54) **VERBUNDSCHICHTPLATTE**
COMPOSITE LAYER PLATE
PLAQUE STRATIFIEE COMPOSITE

(30) Priorität: 22.10.1998 DE 19848683
(43) Veröffentlichungstag der Anmeldung: 05.09.2001
(73) Patentinhaber: BASF AKTIENGESELLSCHAFT, 67056 Ludwigshafen (DE)
(72) Erfinder: MORGENSTERN, Herbert, D-67158 Ellerstadt (DE); HAMMES, Volker, D-67056 Ludwigshafen (DE)
(86) Internationale Anmeldenummer: PCT/EP1999/007680
(87) Internationale Veröffentlichungsnummer: WO 2000/024578

(56) Entgegenhaltungen:
- EP-A- 0 437 745
- EP-A- 0 529 576
- EP-A- 0 580 404
- US-A- 4 567 089
- DATABASE WPI Section Ch, Week 199802 Derwent Publications Ltd., London, GB; Class A23, AN 1998-013612 XP002127502 & JP 09 277476 A (TEIJIN LTD), 28. Oktober 1997 (1997-10-28)
- DATABASE WPI Section Ch, Week 199502 Derwent Publications Ltd., London, GB; Class A18, AN 1995-011440 XP002127503 & JP 06 297644 A (TORAY IND INC), 25. Oktober 1994 (1994-10-25)
- DATABASE WPI Section Ch, Week 199128 Derwent Publications Ltd., London, GB; Class A32, AN 1991-203018 XP002127504 & JP 03 126557 A (SUMITOMO BAKELITE CO), 29. Mai 1991 (1991-05-29)

## Beschreibung

Die Erfindung betrifft eine Verbundschichtplatte aus tiefziehfähigen Thermoplasten oder Thermoplastmischungen, enthaltend mindestens eine Substratschicht und mindestens eine Deckschicht, Verfahren zu ihrer Herstellung, sowie daraus erhältliche Formteile und Verfahren zur Herstellung von Formteilen.

Gleitmittel werden in thermoplastischen Formmassen zur Herabsetzung der Viskosität (innere Gleitmittel) und/oder als Schmiermittel zwischen der Kunststoffschmelze und Werkzeugwandungen (äußere Gleitmittel) verwendet.

Die direkte und gleichmäßige Auftragung des Gleitmittels auf das Formwerkstück ist schwierig. Die thermoplastische Formmasse fließt daher nicht gleichmäßig in der Form und es kommt zu unterschiedlichen Wanddicken im Formkörper. Außerdem ist eine aufwendige Entfernung des Gleitmittels notwendig.

Die EP-A 0 457 082 beschreibt ein- oder mehrschichtige Kunststoffolien mit verbesserter Tiefziehfähigkeit, die mindestens eine Schicht aus einer Kunststoffmischung aus 55 bis 95 Gew.-% eines thermoplastischen Polyolefin-Elastomeren und 45 bis 5 Gew.-% eines anderen Polyolefins oder Styrol-Blockcopolymeren enthalten. Die Mischungen können weitere Füllstoffe, Stabilisatoren, Farbstoffe, Gleitmittel und Flammschutzmittel enthalten.

Die EP-A 0 437 745 beschreibt Heißsiegelfolien mit einer Siegelschicht aus einem schlagzähen Polystyrol, einem Blockcopolymeren, einem Polyolefin, wobei die Siegelschicht 1 bis 20 Gew.-% eines Gleitmittels enthält.

Die Verwendung von 2 bis 10 Gew.-% eines Gleitmittel für die einzelnen Schichten einer Mehrschichtfolie aus überwiegend Polyvinylchlorid werden in der EP-A 0 529 576 beschrieben.

Arbeitet man das Gleitmittel in die gesamte thermoplastische Formmasse ein, so müssen verhältnismäßig große Gleitmittelmengen verwendet werden, um eine ausreichende Schmierwirkung zwischen Kunststoffschmelze und Formwerkzeug zu erreichen. Dies kann die mechanischen, rheologischen und thermischen Eigenschaften des Polymerwerkstoffes beeinträchtigen.

Eine weitere Möglichkeit besteht in der Verwendung sogenannter "Release-Liner". Hierzu wird eine Kunststoffolie oder -film zwischen die Form und den Polymerwerkstoff gelegt und nach der Thermoverformung wieder abgelöst. Beispielsweise beschreibt die WO 90/13419 einen "Release-Liner" aus einem Film mit einer gehärteten Siliconschicht als Trennmittel.

Nach der EP-A 0 113 117 wird zwischen einer dünnen Haut aus einem thermoplastischen Kunststoff (Polyethylen) und dem Werkzeug ein Gleitmittel (Dimethylsiloxan) eingebracht. Das Gleitmittel wird nach dem Thermoformen zusammen mit der Hautschicht entfernt.

Sowohl das Aufbringen als auch das Entfernen einer Kunststofffolie oder -film bedeuten zusätzliche Arbeitsschritte bei der Herstellung eines Formteils.

Aufgabe der vorliegenden Erfindung war es daher, eine tiefziehfähige Verbundschichtplatte oder -folie bereitzustellen, die die vorgenannten Nachteile nicht aufweist. Insbesondere sollte die Verbundschichtplatte oder -folie beim Thermoformen auch ohne zusätzliche Trennfolien eine bessere Steuerung der Wanddickenverhältnisse ermöglichen und ein besseres Wandgleitverhalten und damit bessere Entformung des Formteils zeigen.

Demgemäß wurde eine Verbundschichtplatte oder -folie aus tiefziehfähigen Thermoplasten oder Thermoplastmischungen, enthaltend mindestens eine Substratschicht und mindestens eine Deckschicht, gefunden, wobei die Deckschicht ein Gleitmittel enthält.

Als Deckschicht werden die Schichten bezeichnet, die beim Thermoformen mit dem Formwerkstück in Berührung kommen. Die Substratschicht kann aus einer oder mehreren Schichten aus den gleichen oder verschiedenen Materialien bestehen.

Als tiefziehfähige Thermoplasten werden glasklares Polystyrol (GPPS), schlagzäh modifiziertes Polystyrol (HIPS), Styrolcopolymere, wie Styrol-Butadien-Blockcopolymere, ASA, SAN, ABS, oder Mischungen davon verwendet.

Die Substratschicht und die Deckschicht der Verbundschichtplatte oder -folie kann aus den gleichen oder verschiedenen tiefziehfähigen Thermoplasten sein. Bevorzugt werden für die Substratschicht und die Deckschicht verschiedene Thermoplasten oder Thermoplastmischungen verwendet.

In der Regel verwendet man eine funktionelle Deckschicht (Veredelungsschicht), das heißt, die Deckschicht weist einen höheren Glanz, Farbigkeit, Spannungsrißbeständigkeit, Beständigkeit gegen Chemikalien und Umwelteinflüsse oder eine andere Oberflächenstruktur auf.

Die Dicke der Deckschicht der Verbundschichtplatte oder -folie liegt im allgemeinen im Bereich von 10 bis 1000 µm, bevorzugt 50 bis 500 µm, die der Substratschicht im Bereich von 1 bis 100 mm, bevorzugt 1 bis 10 mm.

Als Gleitmittel eignen sich die für Kunststoffe gebräuchlichen Gleitmittel, wie Metallseifen, Parffinwachse, wachsartige Polymere, höhere Fettalkohole und Fettsäureester oder -amide oder Silikone. Bevorzugt werden Stearinsäure oder Stearate, wie Calcium- oder Zinkstearat, verwendet.

Der Anteil des Gleitmittels beträgt 0,01 bis 1 Gew.-%, bevorzugt 0,1 bis 1 Gew.-%, bezogen auf die gesamte Deckschicht.

Sowohl die Deckschicht als auch die Substratschicht kann die in thermoplastischen Formmassen gebräuchlichen Hilfsstoffe in üblichen Mengen enthalten. Hierzu gehören beispielsweise: Antiblockmittel, Trennmittel, Stabilisatoren, Antistatika, leitfähige Zusätze, Flammschutzmittel, Farbmittel, Flexibilisatoren, Weichmacher, Haftvermittler, Füllstoffe, Verstärkungsmittel oder Treibmittel.

Die Verbundschichtplatten können beispielsweise durch Coextrusion eines gleitmittelhaltigen Thermoplasten oder einer Thermoplastmischung für die Deckschicht mit Thermoplasten oder Thermoplastmischung für die Substratschicht oder Laminieren der Deckschicht auf eine Substratschicht hergestellt werden.

Bevorzugt setzt man das Gleitmittel in Form einer 0,1 bis 50 gew.-%igen, besonders bevorzugt einer 1 bis 10 gew.-%igen Vormischung ("Masterbatch") in einem Thermoplasten ein. Ein solcher "Masterbatch" kann beispielsweise durch Extrudieren eines Thermoplasten mit dem Gleitmittel hergestellt werden. Die Menge des Masterbatches, die man dem Thermoplasten oder der Thermoplastmischung für die Deckschicht zugibt, richtet sich nach der gewünschten Gleitmittelmenge, die die Deckschicht enthalten soll. Als Thermoplast für den Masterbatch kommen die oben genannten Thermoplasten für die Substrat- oder Deckschicht in Betracht, wobei der Thermoplast für den Masterbatch nicht der für die Deckschicht verwendete Thermoplast zu sein braucht. Als Thermoplast für den Masterbatch werden bevorzugt Styrol-Butadien-Blockcopolymere verwendet. Besonders bevorzugt werden die in der WO 95/35335 beschriebenen gummielastischen Styrol-Butadien-Blockcopolymeren mit statistischem S/B-Block.

Die gummielastischen Blockcopolymeren sind aus Hartblöcken S aus vinylaromatischen Monomeren und statistischen Weichblöcken B/S aus Dienen und vinylaromatischen Monomeren aufgebaut und enthalten mindestens die Blockstruktur S-B/S-S, wobei der Diengehalt weniger als 50 Gew.-% und der Anteil der aus den Blöcken B/S gebildeten Weichphase mindestens 60 Gew.-% beträgt, jeweils bezogen auf das gesamte Blockcopolymere.

Man erhält ein solches gummielastisches Blockcopolymer dadurch, daß im Rahmen der vorstehenden Parameter die Weichphase aus einem statistischen Copolymeren eines Vinylaromaten mit einem Dien gebildet wird, z.B. durch Polymerisation in Gegenwart eines polaren Cosolvens oder eines Kaliumsalzes.

Durch die den statischen Einbau der vinylaromatischen Verbindungen in den Weichblock B/S des Blockcopolymeren, z.B. durch die Verwendung von Lewis-Basen während der Polymerisation, wird die Glasübergangstemperatur (T_{g}) beeinflußt. Die Glasübergangstemperatur des Weichblockes B/S beträgt vorzugsweise -50 bis +25°C, bevorzugt -50 bis +5°C, besonders bevorzugt -50 bis -15°C.

Die Glastemperatur des Hartblockes S liegt bevorzugt über 25°C, besonders bevorzugt über 50°C.

Das Molekulargewicht eines Blocks S beträgt vorzugsweise 1000 bis 200.000, insbesondere 5000 bis 50000 [g/mol]. Ganz besonders bevorzugt beträgt das Molekulargewicht eines Blockes S 10000 bis 20000 g/mol. Innerhalb eines Moleküls können S-Blöcke unterschiedliche Molmasse haben.

Das Molekulargewicht des Blocks B/S beträgt üblicherweise von 2000 bis 250000 [g/mol]; bevorzugt sind Werte von 20000 bis 150000 [g/mol].

Auch Block B/S kann wie Block S innerhalb eines Moleküls unterschiedliche Molekulargewichtswerte einnehmen.

Bevorzugte Polymerstrukturen sind S-B/S-S, X-[-B/S-S]₂ und Y-[-B/S-S]₂, wobei X den Rest eines bifunktionellen Kopplungsmittels und Y den Rest eines bifunktionellen Initiators bedeuten. Der statistische Block B/S selbst kann wieder in mehrere Blöcke, z.B. (B/S)₁-(B/S)₂-(B/S)₃, unterteilt sein. Bevorzugt besteht der statistische Block aus 2 bis 15 statistischen Teilblöcken, besonders bevorzugt aus 3 bis 10 Teilblöcken. Die Aufteilung des statistischen Blocks B/S in möglichst viele Teilblöcke (B/S)ₙ bietet den entscheidenden Vorteil, daß auch bei einem Zusammensetzungsgradienten innerhalb eines Teilblocks (B/S)ₙ, wie er sich in der anionischen Polymerisation unter praktischen Bedingungen nur schwer vermeiden läßt (s.u.), sich der B/S-Block insgesamt wie ein nahezu perfektes statistisches Polymer verhält. Es bietet sich deshalb an, weniger als die theoretische Menge an Lewis-Base zuzusetzen, was den Anteil 1,4-Dienverknüpfungen erhöht, die Glastemperatur T_{g} absenkt und die Vernetzungsanfälligkeit des Polymeren mindert.

Bevorzugt ist ein Blockcopolymer der allgemeinen Formel S-B/S-S,
wobei
- S: für einen vinylaromatischen Block,
- B/S: für die Weichphase aus einem statistisch aus Dien- und vinylaromatischen Einheiten aufgebauten Block steht.

Die Weichphase kann in Blöcke (B/S)₁-(B/S)₂ unterteilt sein,
wobei die Indices 1,2 für unterschiedliche Strukturen in dem Sinne stehen, daß das Vinylaromat/Dien-Verhältnis in den einzelnen Blöcken B/S unterschiedlich ist oder sich innerhalb eines Blocks in den Grenzen (B/S)₁(B/S)₂ kontinuierlich ändert, wobei die Glasübergangstemperatur T_{g} jedes Teilblocks unter 25°C liegt.

Besonders bevorzugt ist ein Weichblock B/S, der in mehrere Blöcke (B/S)ₙ gleicher Zusammensetzung unterteilt ist.

Ein Blockcopolymer, das mehrere Blöcke B/S und/oder S mit unterschiedlicher Molmasse je Molekül aufweist, ist ebenfalls bevorzugt.

Bevorzugt als vinylaromatische Verbindung ist Styrol und ferner α-Methylstyrol und Vinyltoluol sowie Mischungen dieser Verbindungen. Bevorzugte Diene sind Butadien und Isopren, ferner Piperylen, 1-Phenylbutadien sowie Mischungen dieser Verbindungen.

Eine besonders bevorzugte Monomerkombination ist Butadien und Styrol. Alle nachstehenden Gewichts- und Volumenangaben beziehen sich auf diese Kombination; bei Verwendung der technischen Äquivalente von Styrol und Butadien muß man ggf. die Angaben entsprechend umrechnen.

Vorzugsweise besteht der Weichblock B/S aus 75 bis 30 Gew.-% Styrol und 25 bis 70 Gew.-% Butadien. Besonders bevorzugt hat ein Weichblock B/S einen Butadienanteil zwischen 35 und 70 % und einen Styrolanteil zwischen 65 und 30 %.

Der Gewichtsanteil des Diens im gesamten Blockcopolymer liegt im Falle der Monomerkombination Styrol/Butadien bei 15 bis 50 Gew.-%, derjenige der vinylaromatischen Komponente entsprechend bei 85 bis 50 Gew.-%. Besonders bevorzugt sind Butadien-Styrol-Blockcopolymere mit einer Monomerzusammensetzung aus 25 bis 40 Gew.-% Dien und 75 bis 60 Gew.-% an vinylaromatischer Verbindung.

Die Blockcopolymeren sind durch anionische Polymerisation in einem unpolaren Lösungsmittel unter Zusatz eines polaren Cosolvens oder eines Kaliumsalzes erhältlich, wie beispielsweise in WO 95/35335 bzw. WO 97/40079 beschrieben.

Der Gewichtsanteil der aus Dien- und vinylaromatischen Sequenzen aufgebauten Weichphase liegt bei 60 bis 95, bevorzugt bei 60 bis 80 und besonders bevorzugt bei 65 bis 75 Gew.-%. Die aus den vinylaromatischen Monomeren entstandenen Blöcke S bilden die Hartphase, deren Gewichtsanteil entsprechend 5 bis 40, bevorzugt 20 bis 40 und besonders bevorzugt 25 bis 35 Gew.-% ausmacht.

Die Blockcopolymeren besitzen ein dem Weich-PVC sehr ähnliches Eigenschaftsspektrum, können jedoch vollkommen frei von migrationsfähigen, niedermolekularen Weichmachern hergestellt werden. Sie zeichnen sich durch eine hohe Sauerstoffpermeation P_{O} und Wasserdampfpermeation P_{W} von über 2000 [cm³.100 µm/m²·d·bar] bzw. über 10 [g 100 µm/m²·d·bar] aus, wobei P_{O} die Sauerstoffmenge in cm³ bzw. P_{W} die Wasserdampfmenge in Gramm angibt, die durch 1 m² Folie mit einer Normdicke von 100 µm je Tag und je bar Partialdruckdifferenz hindurchtreten.

Die Verbundschichtplatte eignet sich zur Herstellung von Formteilen aller Art durch Thermoformen, insbesondere im Tiefziehverfahren. Die Parameter für das Thermoformen, wie Temperaturen des Werkzeugs oder von Zusatzheizungen, werden entsprechend den in der Verbundschichtplatte oder Folie verwendeten Thermoplasten eingestellt. Im Allgemeinen wird bei einer Werkzeugtemperatur von ca. 50 bis 120°C gearbeitet. Die Formteile sind für alle Anwendungen geeignet, bei denen thermogeformte Kunststoffteile zum Einsatz kommen. Insbesondere eignen sie sich für Kühlgeräteinnenverkleidungen, für Fahrzeugzubehörteile, wie Fahrzeugauskleidungen oder Dachkoffer, für Freizeit- und Sanitärartikel oder Werbeträger wie Displays.

In der Kühlgeräteindustrie werden häufig zweischichtige Verbundplatten verwendet, bei denen die Substratschicht aus schlagfestem und spannungsrißbeständigem Polystyrol besteht und die Deckschicht als Glanzschicht eine Mischung aus Standard-Polystyrol mit schlagfestem Polystyrol enthält.

Das Verfahren zeichnet sich durch eine hohe Wirtschaftlichkeit aus. Ein Einsprühen des Werkstückes mit Gleitmittel oder das Einlegen und Ablösen von Trennfolien ist nicht nötig. Da das Gleitmittel nur in der dünnen Deckschicht vorhanden ist, werden die mechanischen, thermischen und rheologischen Eigenschaften des Werkstoffes nicht oder nur geringfügig beeinträchtigt. Aufgrund des besseren Wandgleitverhaltens wird der Verarbeitungsbereich vergrößert, das heißt die Thermoformung kann beispielsweise bei niedrigeren Temperaturen erfolgen. Das kann zu einer geringeren Materialschädigung, beispielsweise einer geringeren Vergilbung, führen. Geringere Umformkräfte reduzieren den Ausschuß, geringere Entformkräfte verhindern die Material- oder Formteilschädigung beispielsweise durch "Crazes" oder Weißbruch. Weiter Vorteile sind die Vermeidung von Faltenbildung und Reduzierung von Abschreckmarkierungen.

Durch das bessere Wandgleitverhalten werden die hohen Wanddicken in den ersten Kontaktstellen zum Thermoformwerkzeug vermindert und somit kann überschüssiges Material eingespart werden. Dieses gesparte Material verstärkt die restliche Geometrie des Thermoformteils und ermöglicht letztendlich eine Verringerung der Plattendicke, die mit Kosteneinsparungen verbunden ist.

Durch Thermoformen der erfindungsgemäßen Verbundschichtplatten oder -folien können auch anspruchsvollere Designs, z.B. Formstücke mit engen Krümmungsradien, tiefen Einschnitten, hohen Verstreckungsgraden oder Hinterschnitten, erschlossen werden. Da das Gleitmittel in der Deckschicht verbleibt, ist die Kratzerempfindlichkeit des Formteils geringer.

Das Gleitmittel wirkt in der Grenzschicht der Deckschicht zum Thermoformwerkzeug, das aus Metall, Holz oder glasfaserverstärktem Kunststoff (GFK) bestehen kann. Die Verwendung eines Styrol-Butadien-Blockcopolymeren in der Deckschicht fördert die Diffusion des Gleitmittels an die Oberfläche zusätzlich und verbessert so die Orientierungsbalance längs/quer.

### Beispiele

Masterbatch MB: Der in den Beispielen verwendete Masterbatch enthielt 95 Gew.-% eines Styrol-Butadien-Blockcopolymeren nach Beispiel 1 aus WO 95/35335 und 5 Gew.-% Calciumstearat.

PS1: Schlagfestes Polystyrol mit einer Schmelzevolumenrate MVR 200/5 von 4, einem Zug-E-Modul von 1500 MPa und einer Streckspannung von 21 MPa (Polystyrol 2710 der BASF AG)

PS2: Schlagfestes Polystyrol mit einer Schmelzevolumenrate MVR 200/5 von 4, einem Zug-E-Modul von 1900 MPa und einer Streckspannung von 32 MPa (Polystyrol 585 K der BASF AG)

PS3: Standard-Polystyrol mit einer Schmelzevolumenrate MVR 200/5 von 10, einem Zug-E-Modul von 3300 MPa und einer Bruchspannung von 46 MPa (Polystyrol 143 E der BASF AG)

PS4: Schlagfestes Polystyrol mit einer Schmelzevolumenrate MVR 200/5 von 7,5, einem Zug-E-Modul von 1400 MPa und einer Streckspannung von 17 MPa (Polystyrol 2712 der BASF AG)

### Beispiel 1

Es wurden coextrudierte Platten mit einer Substratschicht aus PS1 und einer 0,1 mm starken Deckschicht (Glanzschicht) aus 48,5 Gew.-% PS2, 48,5 Gew.-% PS3 und 3 Gew.-% MB hergestellt. Die Dicke der Substratschicht wurde von 3,0 bis 4,1 mm variiert.

### Vergleichsversuch V1

Es wurden coextrudierte Platten mit einer Substratschicht aus PS1 und einer 0,1 mm starken Deckschicht (Glanzschicht) aus 50 Gew.-% PS2 und 50 Gew.-% PS3 hergestellt. Die Dicke der Substratschicht wurde von 3,0 bis 4,1 mm variiert.

Die coextrudierten Platten aus Beispiel 1 und dem Vergleichsversuch wurden unter gleichen Bedingungen mit der Deckschicht zum Werkzeug durch Positivverformung auf einer UA 100 ED der Firma Illig zu Behältern verformt. Die Qualität der thermogeformten Behälter wurde visuell beurteilt und die Ergebnisse in Tabelle 1 zusammengestellt.

**Tabelle 1:**

| Entformbarkeit von Behältern aus coextrudierten Platten | | | |
|---|---|---|---|
| Dicke der Substratschicht [mm] | Gesamtdicke [mm] | B1 | V1 |
| 4,1 | 4,2 | Gut | Gut |
| 4,0 | 4,1 | Gut | Gut |
| 3,9 | 4,0 | Gut | Gut |
| 3,8 | 3,9 | Gut | Gut |
| 3,7 | 3,8 | Gut | Riß beim Entformen |
| 3,6 | 3,7 | Gut | Riß beim Entformen |
| 3,5 | 3,6 | Gut | Riß beim Entformen |
| 3,4 | 3,5 | Gut | Riß beim Entformen |
| 3,3 | 3,4 | Gut | Riß beim Entformen |
| 3,2 | 3,3 | Gut | Riß beim Entformen |
| 3,1 | 3,2 | Riß beim Entformen | Riß beim Entformen |
| 3,0 | 3,1 | Riß beim Entformen | Riß beim Entformen |

Die in Tabelle 1 zusammengefaßten Ergebnisse zeigen, daß bei Verwendung des gleitmittelhaltigen Masterbatches in der Deckschicht eine gute Entformung des Behälters bei einer minimalen Gesamtplattendicken von 3,3 mm erreicht werden kann. Im Vergleichsversuch ohne Gleitmittel kommt es bereits bei einer Gesamtplattendicke von 3,8 mm zum Aufreißen während der Formgebung bzw. zur Schädigung durch Weißbruch oder Rißbildung während der Entformung. Die reduzierbare Plattendicke in Beispiel 1 entspricht einer Materialeinsparung von ca. 15 % gegenüber dem Vergleichsversuch V1.

### Beispiel 2

Es wurde eine coextrudierte Platte mit einer 3,8 mm dicken Substratschicht aus PS1 (Farbe weiß 744) und einer 0,2 mm starken Deckschicht aus 98 Gew.-% PS1 und 0,2 Gew.-% Stearinsäure hergestellt. Die Stearinsäure wurde vor der Coextrusion auf das PS1 aufgetrommelt.

### Vergleichsversuch V2

Es wurde eine 4 mm dicke, extrudierte Monoplatte aus PS1 (Farbe weiß 744) verwendet.

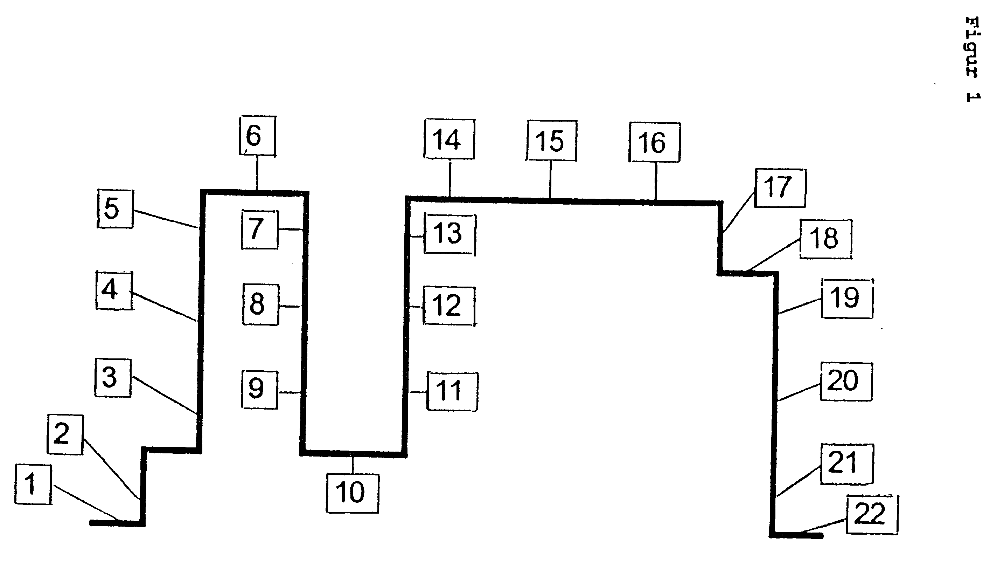

Die coextrudierten Platten (Plattenmaße: 660 x 410 mm, Gesamtdicke 4 mm) aus Beispiel 2 und die Monoplatte aus dem Vergleichsversuch V2 wurden unter gleichen Bedingungen mit der Deckschicht zum Werkzeug durch Positivverformung auf einer UA 100 ED der Firma Illig zu Kühlschrankinnenbehältern verformt. Die Werkzeugtemperatur betrug 80°C. Die Kühlschrankinnenbehälter wurden aufgeschnitten und der Wanddickenverlauf beurteilt. Figur 1 zeigt den Querschnitt des Kühlschrankinnenbehälters und die Meßpunkte, an denen die Wanddicke gemessen wurde. Die Meßwerte für Beispiel 2 und Vergleichsversuch V2 sind in Tabelle 2 zusammengestellt. Die minimale Wanddicke entlang dem Schnitt war für den Behälter aus Beispiel 2 deutlich größer als bei dem Behälter aus Vergleichsversuch 2.

**Tabelle 2:**

| Dickenverteilung an einem thermogeformten Minikühlschrankinnenbehälter | | |
|---|---|---|
| Meßpunkt | Materialstärke nach dem Thermoformen *) [mm] | |
| | Monoplatte V2 | coextrudierte Platte B2 |
| | | |
| 1 | 0,7 | 0,7 |
| 2 | 0,4 | 0,45 |
| 3 | 0,65 | 0,7 |
| 4 | 0,75 | 0,8 |
| 5 | 0,9 | 0,85 |
| 6 | 0,85 | 0,8 |
| 7 | 1,4 | 1,25 |
| 8 | 0,6 | 0,8 |
| 9 | 0,5 | 0,7 |
| 10 | 1,9 | 1,8 |
| 11 | 0,5 | 0,8 |
| 12 | 0,5 | 0,9 |
| 13 | 1,7 | 1,4 |
| 14 | 2 | 1,55 |
| 15 | 1,9 | 1,5 |
| 16 | 1,7 | 1,35 |
| 17 | 1,2 | 0,95 |
| 18 | 1,05 | 0,9 |
| 19 | 1,7 | 1,4 |
| 20 | 0,55 | 0,9 |
| 21 | 0,65 | 0,75 |
| 22 | 0,95 | 1,1 |
| | | |
| Mittlere Dicke | 1,05 | 1,02 |
| Var. Koeff. | 0,53 | 0,34 |

| | | |
|---|---|---|
| *) gemessen mit Ultrashall Dickenmeßgerät der Firma Panametrics entlang der Mittellinie im Längsschnitt | | |

### Beispiel 3

Es wurde eine coextrudierte Platte mit einer 4,6 mm dicken Substratschicht aus PS4 und einer 0,2 mm starken Deckschicht aus 95 Gew.-% PS4 und 5 Gew.-% MB hergestellt.

### Vergleichsversuch V3

Es wurde eine 4,8 mm dicke, extrudierte Monoplatte aus PS4 verwendet.

Die coextrudierten Platten aus Beispiel 3 und die Monoplatte aus dem Vergleichsversuch V3 wurden unter gleichen Bedingungen mit der Deckschicht zum Werkzeug durch Positivverformung auf einer UA 100 ED der Firma Illig zu Kühlschrankinnenbehältern verformt.

Bei dem Kühlschrankinnenbehälter aus der Monoplatte nach Vergleichsversuch 3 zeigten sich nach kurzer Lagerzeit auf der Innenseite im Kantenbereich gelbe Streifen. Die Streifen markieren die Berührungslinien der oberen Werkzeugecken beim Einfahren des Thermoformwerkzeuges in die zuvor mittels Druckluft geformte Blase. Die Kühlschrankinnenbehälter aus der coextrudierten Platte nach Beispiel 3 zeigten auch nach fünf Wochen Lagerzeit keine Streifen.

## Patentansprüche

1. Verbundschichtplatte aus tiefziehfähigen Thermoplasten oder Thermoplastmischungen, enthaltend mindestens eine Substratschicht einer Dicke von 1 bis 100 mm und mindestens eine Deckschicht einer Dicke von 10 bis 1000 µm aus dem gleichen oder verschiedenen tiefziehfähigen Thermoplasten, ausgewählt aus der Gruppe aus glasklarem oder schlagzäh modifiziertem Polystyrol, Styrolcopolymeren oder Mischungen davon, **dadurch gekennzeichnet, daß** die Deckschicht 0,01 bis 1 Gew.-% eines Gleitmittels enthält.

2. Verbundschichtplatte nach Anspruch 1, **dadurch gekennzeichnet, daß** als Gleitmittel Metallseifen, Paraffinwachse, wachsartige Polymere, höhere Fettalkohole und Fettsäureester oder -amide oder Silikone, verwendet werden.

3. Verbundschichtplatte nach Anspruch 2, **dadurch gekennzeichnet, daß** als Gleitmittel Stearinsäure oder Stearate verwendet werden.

4. Verbundschichtplatte nach einem der Ansprüche 1 bis 3, **dadurch gekennzeichnet, daß** die Deckschicht einen höheren Glanz als die Substratschicht aufweist.

5. Verfahren zur Herstellung einer Verbundschichtplatte gemäß einem der Ansprüche 1 bis 4 durch Coextrusion eines gleitmittelhaltigen Thermoplasten oder Thermoplastmischung für die Deckschicht mit einem Thermoplasten oder Thermoplastmischung für die Substratschicht oder Laminieren mindestens einer Deckschicht auf eine Substratschicht.

6. Verfahren nach Anspruch 5, **dadurch gekennzeichnet, daß** man das Gleitmittel in Form einer 0,1 bis 50 gew.-%igen Vormischung in einem Styrol-Butadien-Blockcopolymeren dem Thermoplasten oder der Thermoplastmischung für die Deckschicht zugibt.

7. Verfahren zur Herstellung von Formteilen durch Thermoformen einer Verbundschichtplatte gemäß einem der Ansprüche 1 bis 4.

8. Formteile hergestellt aus einer Verbundschichtplatte gemäß einem der Ansprüche 1 bis 4.

## Claims

1. A layered composite sheet made from thermoformable thermoplastics or mixtures of thermoplastics, comprising at least one substrate layer of thickness from 1 to 100 mm and at least one outer layer of thickness from 10 to 1000 µm made from the same, or from different, thermoformable thermoplastics, selected from the class consisting of glass-clear or impact-modified polystyrene, styrene copolymers and mixtures of these wherein the outer layer comprises from 0.01 to 1% by weight of a lubricant.

2. A layered composite sheet as claimed in claim 1, wherein the lubricant used comprises metal soaps, paraffin waxes, waxy polymers, higher fatty alcohols, or the esters or amides of fatty acids, or silicones.

3. A layered composite sheet as claimed in claim 2, wherein stearic acid or stearates are used as lubricant.

4. A layered composite sheet as claimed in any one of claims 1 to 3, wherein the outer layer has higher gloss than the substrate layer.

5. A process for producing a layered composite sheet as claimed in any one of claims 1 to 4 by coextrusion of a lubricant-containing thermoplastic or mixture of thermoplastics for the outer layer with a thermoplastic or mixture of thermoplastics for the substrate layer or lamination of at least one outer layer to a substrate layer.

6. A process as claimed in claim 5, wherein the lubricant is in the form of a 0.1 - 50% strength by weight premix in a styrene-butadiene block copolymer when added to the thermoplastic or to the mixture of thermoplastics for the outer layer.

7. A process for producing moldings by thermoforming a layered composite sheet as claimed in any one of claims 1 to 4.

8. A molding produced from a layered composite sheet as claimed in any one of claims 1 to 4.

## Revendications

1. Plaque stratifiée composite à base de matières thermoplastiques ou mélanges de matières thermoplastiques emboutissables, contenant au moins une couche de substrat d'une épaisseur de 1 à 100 mm et au moins une couche de recouvrement d'une épaisseur de 10 à 1.000 µm à base de matières thermoplastiques emboutissables identiques ou différentes, choisies parmi le groupe du polystyrène clair comme du verre ou modifié quant à la résistance au choc, des copolymères de styrène ou de leurs mélanges, **caractérisée en ce que** la couche de recouvrement contient 0,01 à 1% en poids d'un agent lubrifiant.

2. Plaque stratifiée composite suivant la revendication 1, **caractérisée en ce que**, comme agent lubrifiant, on utilise des savons métalliques, des cires de paraffine, des polymères cireux, des alcools gras supérieurs et des esters ou amides d'acides gras ou des silicones.

3. Plaque stratifiée composite suivant la revendication 2, **caractérisée en ce que**, comme agent lubrifiant, on utilise de l'acide stéarique ou des stéarates.

4. Plaque stratifiée composite suivant l'une des revendications 1 à 3, **caractérisée en ce que** la couche de recouvrement présente un brillant supérieur à la couche de substrat.

5. Procédé de préparation d'une plaque stratifiée composite suivant l'une des revendications 1 à 4, par coextrusion d'une matière thermoplastique ou d'un mélange de matières thermoplastiques contenant de l'agent lubrifiant pour la couche de recouvrement avec une matière thermoplastique ou un mélange de matières thermoplastiques pour la couche de substrat ou par laminage d'au moins une couche de recouvrement sur une couche de substrat.

6. Procédé suivant la revendication 5, **caractérisé en ce qu'**on ajoute l'agent lubrifiant sous la forme d'un prémélange à 0,1 jusqu'à 50% en poids dans un copolymère bloc de styrène-butadiène à la matière thermoplastique ou au mélange de matières thermoplastiques pour la couche de recouvrement.

7. Procédé de préparation de pièces façonnées par thermoformage d'une plaque stratifiée composite suivant l'une des revendications 1 à 4.

8. Pièces façonnées fabriquées à partir d'une plaque stratifiée composite suivant l'une des revendications 1 à 4.
